# EUROPEAN PATENT SPECIFICATION

(11) **EP 2 849 479 B1**
(45) Date of publication and mention of the grant of the patent: **15.04.2020**
(21) Application number: 12875516.2
(22) Date of filing: 28.04.2012
(51) Int. Cl.: H04W 24/10, H04W 36/00, H04W 24/02, H04W 16/14

(54) **HANDOVER SIGNALLING REDUCTION FOR IN DEVICE INTERFERENCE MEASUREMENTS CONFIGURATION**
REDUZIERUNG VON HANDOVER SIGNALISIERUNG FÜR KONFIGURATION VON IN DEVICE INTERFERENZ MESSUNGEN
RÉDUCTION DE SIGNALISATION LORS D'UN CHANGEMENT DE CELLULE POUR LA CONFIGURATION DES MESURES D'INTERFÉRENCE AU SEIN D'UN TERMINAL

(43) Date of publication of application: 18.03.2015
(73) Proprietor: Fujitsu Limited, Kawasaki-shi, Kanagawa 211-8588 (JP)
(72) Inventor: WANG, Weiwei, Beijing 100025 (CN); XU, Haibo, Beijing 100025 (CN); ZHOU, Hua, Beijing 100025 (CN)
(74) Representative: Haseltine Lake Kempner LLP
(86) International application number: PCT/CN2012/074889
(87) International publication number: WO 2013/159355

(56) References cited:
- WO-A1-2011/160077
- WO-A2-2012/023734
- CN-A- 1 248 359
- CN-A- 101 651 879
- CN-A- 101 926 200
- CN-A- 101 945 409
- CN-A- 102 170 644
- CN-A- 102 421 135
- US-A1- 2012 020 231
- NOKIA SIEMENS NETWORKS ET AL: "IDC Signalling to Target eNB", 3GPP DRAFT; R2-121097 IDC SIGNALLING IN TARGET ENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, South Korea; 20120326 - 20120330, 20 March 2012 (2012-03-20), XP050606146, [retrieved on 2012-03-20]
- ERICSSON ET AL: "Measurements and triggers for IDC indication", 3GPP DRAFT; R2-121645 MEASUREMENTS AND TRIGGERS FOR IDC INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, South Korea; 20120326 - 20120330, 20 March 2012 (2012-03-20), XP050606386, [retrieved on 2012-03-20]
- CMCC: "Stage-2 agreements on signalling and procedure for interference avoidance for IDC", 3GPP DRAFT; R2-121968 STAGE-2 AGREEMENTS ON INTERFERENCE AVOIDANCE FOR IDC_RAN2-77BIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 17 April 2012 (2012-04-17), XP050606595, [retrieved on 2012-04-17]
- RESEARCH IN MOTION UK LIMITED: "Signaling Procedures for IDC operation", 3GPP DRAFT; R2-121281, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 17 March 2012 (2012-03-17), XP050605861, [retrieved on 2012-03-17]

## Description

### Technical Field

The present disclosure relates to the field of communications, and in particular to a configuration method for a coexistent interference frequency set, a base station and UE.

### Background

In order to achieve network access everywhere, terminal equipment needs to be equipped with multiple sets of transceivers for accessing various networks. For example, the terminal equipment may be simultaneously equipped with transceivers of a long-term evolution (LTE) system and an industrial scientific medical (ISM) system (such as WiFi, and Bluetooth, etc.), etc. As multiple sets of transceivers in the same terminal equipment are very close to each other, power of a transmitter of a system may be much higher than that of a receiver of another system.

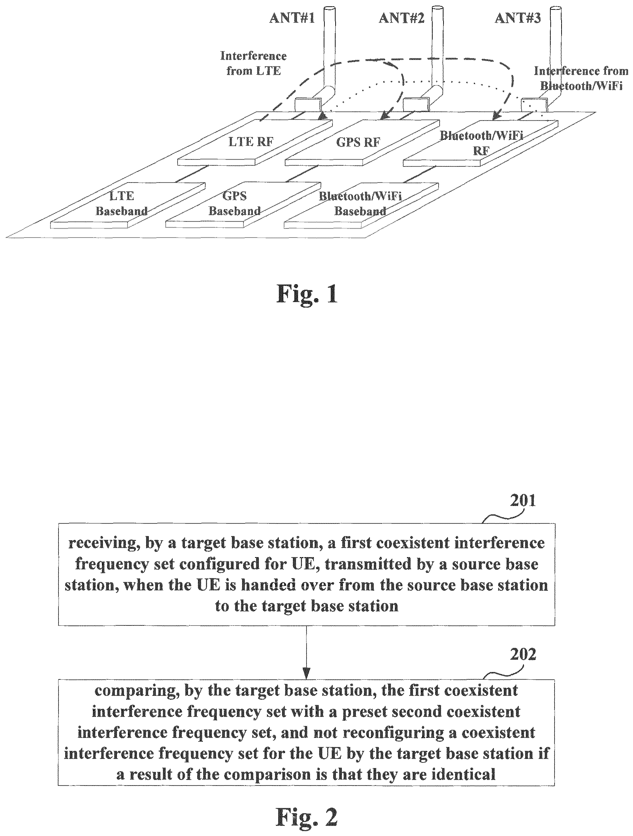

Figure 1 gives an example of interference coexistence. As shown in Fig. 1, the terminal equipment may include an LTE system, a GPS system and a Bluetooth/WiFi system, wherein the LTE system may bring interference to the Bluetooth/WiFi system, and the Bluetooth/WiFi system may also bring interference to the LTE system.

Currently, in a coexistent interference avoidance mechanism of LTE-A, a base station may configure a coexistent interference frequency set for UE, so that the UE needs only to evaluate whether there exists coexistent interference in frequencies in the coexistent interference frequency set. And then the UE may transmit an evaluation result of these frequencies to the base station, thereby reducing times of evaluation of frequencies by the UE and improving system performance.

However, in the implementation of the present disclosure, the inventors found that following defect exists in the prior art: a target base station will reconfigure a coexistent interference frequency set for UE when the UE is handed over from a source base station to the target base station. Actually, such reconfiguration is redundant if a frequency set of the source base station is identical to that of the target base station. And overhead of configuring a coexistent interference frequency set is relatively large, resulting in waste of system resources, and lowering the system performance.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Non-patent document NOKIA SIEMENS NETWORKS ET AL: 'IDC Signaling to Target eNB" discloses instead of trying to select one of: (1) transferring information from a source to the eNB or (2) reporting information to the target eNB by the UE, combine the two options by having the UE only report IDC information if it contains new information.

Non patent document ERICSSON ET AL: 'Measurements and triggers for IDC indication' discloses how a network can control the number of IDC interference indications and what kind of information is needed in the IDC interference reporting.

WO 2012/023734 A2 discloses a method of transmitting, by a terminal, IDC (In-Device Coexistence) interference information to a base station, according to the present invention. Specifically, the invention comprises the steps of: receiving quality measurement configuration information from the base station; measuring quality using the information when operations of one or more second communication modules coexisting in the terminal are sensed; setting a frequency used in the measuring quality as a disabled frequency due to the IDC interference when the measured quality is less than a threshold value; and transmitting information about the disabled frequency to the base station.

### Summary

The present invention is defined by the appended independent claims, to which reference should now be made. Specific embodiments are defined in the dependent claims

Embodiments of the present disclosure provide a configuration method for a coexistent interference frequency set, a base station and UE, with an object being to reduce configuration of coexistent interference frequency sets by a base station.

According to an aspect of the embodiments of the present disclosure, there is provided a configuration method for a coexistent interference frequency set, including:
receiving, by a target base station, a first coexistent interference frequency set configured for UE transmitted by a source base station, when the UE is handed over from the source base station to the target base station; and
comparing, by the target base station, the first coexistent interference frequency set with a preset second coexistent interference frequency set, and not reconfiguring a coexistent interference frequency set for the UE if a result of the comparison is that they are identical.

According to another aspect of the embodiments of the present disclosure, there is provided a configuration method for a coexistent interference frequency set, including:
transmitting, by a source base station to a target base station, a first coexistent interference frequency set configured for UE, when the UE is handed over from the source base station to the target base station.

According to still another aspect of the embodiments of the present disclosure, there is provided a configuration method for a coexistent interference frequency set, including:
performing, by UE, coexistent interference evaluation on frequencies in a first coexistent interference frequency set, when the UE does not receive information on reconfiguring a coexistent interference frequency set;
wherein the first coexistent interference frequency set is configured by a source base station; when the UE is handed over from the source base station to a target base station, the first coexistent interference frequency set is transmitted by the source base station to the target base station; and the target base station does not reconfigure a coexistent interference frequency set for the UE if the first coexistent interference frequency set is identical to a preset second coexistent interference frequency set.

According to still another aspect of the embodiments of the present disclosure, there is provided a base station, including:
a first receiving unit, configured to receive a first coexistent interference frequency set configured for UE transmitted by a source base station, when the UE is handed over from the source base station to a target base station; and
a comparing unit, configured to compare the first coexistent interference frequency set with a preset second coexistent interference frequency set; wherein if a result of the comparison is that they are identical, the target base station does not reconfigure a coexistent interference frequency set for the UE.

According to still another aspect of the embodiments of the present disclosure, there is provided a base station, including:
a third transmitting unit, configured to transmit a first coexistent interference frequency set configured for UE to a target base station, when the UE is handed over from a source base station to the target base station.

According to still another aspect of the embodiments of the present disclosure, there is provided UE, including:
an evaluating unit, configured to perform coexistent interference evaluation on frequencies in a first coexistent interference frequency set when no information on reconfiguring a coexistent interference frequency set is received;
wherein the first coexistent interference frequency set is configured by a source base station; when the UE is handed over from the source base station to a target base station, the first coexistent interference frequency set is transmitted by the source base station to the target base station; and the target base station does not reconfigure a coexistent interference frequency set for the UE if the first coexistent interference frequency set is identical to a preset second coexistent interference frequency set.

According to still another aspect of the embodiments of the present disclosure, there is provided a computer-readable program, wherein when the program is executed in a base station, the program enables a computer to carry out the configuration method for a coexistent interference frequency set as described above in the base station.

According to still another aspect of the embodiments of the present disclosure, there is provided a storage medium in which a computer-readable program is stored, wherein the computer-readable program enables a computer to carry out the configuration method for a coexistent interference frequency set as described above in an base station.

According to still another aspect of the embodiments of the present disclosure, there is provided a computer-readable program, wherein when the program is executed in UE, the program enables a computer to carry out the configuration method for a coexistent interference frequency set as described above in the UE.

According to still another aspect of the embodiments of the present disclosure, there is provided a storage medium in which a computer-readable program is stored, wherein the computer-readable program enables a computer to carry out the configuration method for a coexistent interference frequency set as described above in UE.

The advantage of the embodiments of the present disclosure exists in that: not reconfiguring a coexistent interference frequency set for the UE by the target base station if the first coexistent interference frequency set and the second coexistent interference frequency set are identical, when the target base station receives the first coexistent interference frequency set configured for the UE and transmitted by the source base station when the UE is handed over from the source base station to the target base station, configuration of coexistent interference frequency by the base station may be reduced, waste of system resources is lowered, and performance of the system is improved.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/includes" when used in this specification is taken to specify the presence of stated features, integers, steps or components but does not preclude the presence or addition of one or more other features, integers, steps, components or groups thereof.

### Brief Description of the Drawings

Many aspects of the present disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be enlarged or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
Figure 1 is an example of interference coexistence in the prior art;
Figure 2 is a flowchart of the configuration method of Embodiment 1 of the present disclosure;
Figure 3 is another flowchart of the configuration method of Embodiment 1 of the present disclosure;
Figure 4 is a flowchart of the configuration method of Embodiment 2 of the present disclosure;
Figure 5 is another flowchart of the configuration method of Embodiment 2 of the present disclosure;
Figure 6 is a flowchart of the configuration method of Embodiment 3 of the present disclosure;
Figure 7 is another flowchart of the configuration method of Embodiment 3 of the present disclosure;
Figure 8 is a schematic diagram of the structure of the base station of Embodiment 4 of the present disclosure;
Figure 9 is another schematic diagram of the structure of the base station of Embodiment 4 of the present disclosure;
Figure 10 is a schematic diagram of the structure of the UE of Embodiment 5 of the present disclosure;
Figure 11 is another schematic diagram of the structure of the UE of Embodiment 5 of the present disclosure; and
Figure 12 is a schematic diagram of the structure of the base station of Embodiment 6 of the present disclosure.

### Detailed Description

The foregoing and other features of the embodiments of the present disclosure will become apparent with reference to the drawings and the following description. In the description and drawings, particular embodiments of the present disclosure are disclosed, which show some embodiments in which the principle of the present disclosure may be employed. It should be understood that the present disclosure is not limited to the described embodiments, on the contrary, the present disclosure includes all the modifications, thereof falling within the scope of the appending claims.

### Embodiment 1

An embodiment of the present disclosure provides configuration method for a coexistent interference frequency set, applicable to a target base station side. Fig. 2 is a flowchart of the configuration method of the embodiment of the present disclosure. As shown in Fig. 2, the configuration method includes:
step 201: receiving, by a target base station, a first coexistent interference frequency set configured for UE transmitted by a source base station, when the UE is handed over from the source base station to the target base station; and
step 202: comparing, by the target base station, the first coexistent interference frequency set with a preset second coexistent interference frequency set, and not reconfiguring a coexistent interference frequency set for the UE if a result of the comparison is that they are identical.

In this embodiment, the first coexistent interference frequency set is configured by the source base station for the UE, and may include one or more pieces of frequency information. For example, the first coexistent interference frequency set may be denoted as follows: A={f₁, f₂, f₃, f₄}. The UE may perform coexistent interference evaluation according to the first coexistent interference frequency set. The relevant art may be referred to for how to configure a coexistent interference frequency set and how to perform coexistent interference evaluation, which shall not be described herein any further.

In this embodiment, different from the relevant art, the source base station transmits the first coexistent interference frequency set to the target base station. The first coexistent interference frequency set may be transmitted via a handover request message. For example, besides existing handover information, the handover request message may further include the first coexistent interference frequency set. However, it is not limited thereto, and other messages may be used according to an actual situation for transmitting the first coexistent interference frequency set.

In particular implementation, transmission may be performed via an X2 interface, and may also be performed via an S1 interface. However, it is not limited thereto, and a particular manner of transmission may be determined according to an actual situation.

The target base station may generate a second coexistent interference frequency set for the UE in advance. The second coexistent interference frequency set may be configured by the target base station according to situations of use of the frequencies of itself and neighboring base stations. For example, the target base station may configure the second coexistent interference frequency set according to frequencies supported by itself and a frequency load status of the neighboring base stations.

The second coexistent interference frequency set may also include one or more pieces of frequency information; wherein, the second coexistent interference frequency set may be identical to or different from the first coexistent interference frequency set; and the second coexistent interference frequency set may contain the first coexistent interference frequency set, or the first coexistent interference frequency set may contain the second coexistent interference frequency set.

In this embodiment, after receiving the first coexistent interference frequency set transmitted by the source base station, the target base station may compare the first coexistent interference frequency set with the second coexistent interference frequency set, and if the first coexistent interference frequency set is identical to the second coexistent interference frequency set (for example, the second coexistent interference frequency set B={f₁, f₂, f₃, f₄}), the target base station does not reconfigure a coexistent interference frequency set for the UE, thereby reducing configuration of coexistent interference frequency sets.

In particular implementation, the target base station may further transmit indication information on use of the first coexistent interference frequency set to the UE. The indication information may be transmitted during the handover process, and may also be transmitted after completion of the handover process, and the UE may proceed with use of the first coexistent interference frequency set.

Therefore, in a case where the UE does not receive the information on reconfiguring a coexistent interference frequency set transmitted by the target base station or receives the indication information on using the first coexistent interference frequency set transmitted by the target base station, the UE may still perform coexistent interference evaluation on the frequencies (such as f₁, f₂, f₃, f₄) of the first coexistent interference frequency set.

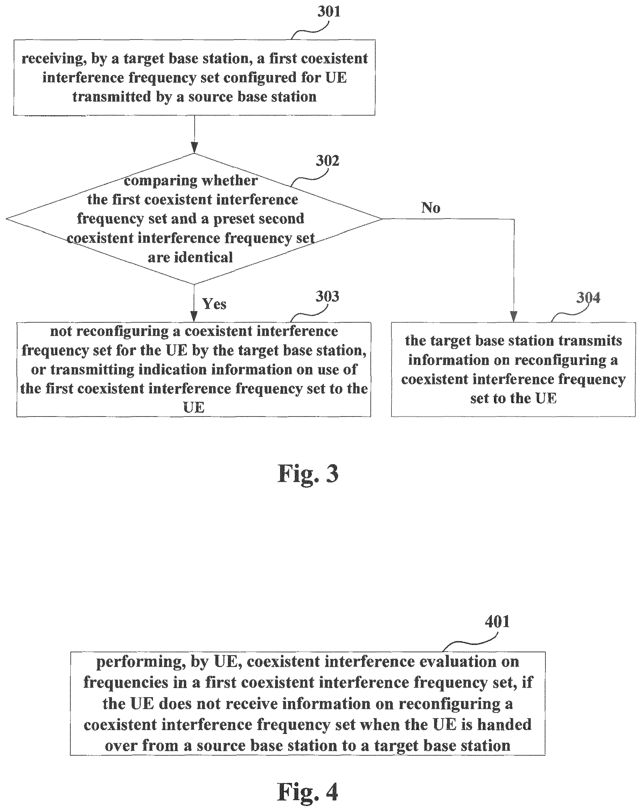

Fig. 3 is another flowchart of the configuration method of the embodiment of the present disclosure. As shown in Fig. 3, the configuration method includes:
step 301: receiving, by a target base station, a first coexistent interference frequency set configured for UE transmitted by a source base station, when the UE is handed over from the source base station to the target base station;
step 302:comparing, by the target base station, the first coexistent interference frequency set with a preset second coexistent interference frequency set, and judging whether a result of the comparison is that they are identical; executing step 303 if the result of the comparison is that they are identical; and executing step 304 if the result of the comparison is that they are different;
step 303: not reconfiguring, by the target base station, a coexistent interference frequency set for the UE, or transmitting indication information on use of the first coexistent interference frequency set to the UE;
in this embodiment, if the first coexistent interference frequency set (for example, set A={f₁, f₂, f₃, f₄}) is identical to the second coexistent interference frequency set (for example, set B={f₁, f₂, f₃, f₄}), the target base station needs not to reconfigure a coexistent interference frequency set for the UE, or transmits an indication message indicating that the UE may use a coexistent interference frequency set identical to that of the source base station. In such a case, the UE may follow a set A of the source base station to perform coexistent interference evaluation;
step 304: reconfiguring, by the target base station, a coexistent interference frequency set for the UE.

In this embodiment, if the first coexistent interference frequency set is different from the second coexistent interference frequency set, the target base station needs to transmit information on reconfiguring a coexistent interference frequency set to the UE. It should noted that the process of reconfiguration may be performed during the handover process; for example, the information on reconfiguring a coexistent interference frequency set may be transmitted to the UE via a handover command; however, it is not limited thereto, and it may also be performed after the process of the handover.

In a mode of implementation, the information on reconfiguring a coexistent interference frequency set may include the second coexistent interference frequency set, so that the UE performs coexistent interference evaluation on frequencies in the second coexistent interference frequency set.

If set A={f₁, f₂, f₃, f₄}) and set B={f₃, f₅, f₆}, the target base station may transmit {f₃, f₅, f₆} to the UE, and the UE performs coexistent interference evaluation on {f₃, f₅, f₆}.

In another mode of implementation, if the first coexistent interference frequency set contains the second coexistent interference frequency set, the information on reconfiguring a coexistent interference frequency set may include a third coexistent interference frequency set, frequencies in the third coexistent interference frequency set being contained in the first coexistent interference frequency set but not contained in the second coexistent interference frequency set. Hence, the UE may perform coexistent interference evaluation on the frequencies contained in the first coexistent interference frequency set but not contained in the third coexistent interference frequency set.

For example, the first coexistent interference frequency set A={f₁, f₂, f₃, f₄, f₅, f₆} and the second coexistent interference frequency set B={f₃, f₄, f₅, f₆}, then the third coexistent interference frequency set C={f₁, f₂}. Therefore, the target base station needs only to transmit {f₁, f₂} to the UE, and the UE may determine to perform coexistent interference evaluation on {f₃, f₄, f₅, f₆} according to {f₁, f₂, f₃, f₄, f₅, f₆} and {f₁, f₂}.

In this mode of implementation, for example, in a case where the first coexistent interference frequency set contains the second coexistent interference frequency set and both of the first coexistent interference frequency set and the second coexistent interference frequency set are relatively large, the relatively small third coexistent interference frequency set may only be transmitted, thereby saving communication resources and improving the performance of the system.

In another mode of implementation, if the second coexistent interference frequency set contains the first coexistent interference frequency set, the information on reconfiguring a coexistent interference frequency set may include a fourth coexistent interference frequency set, frequencies in the fourth coexistent interference frequency set being not contained in the first coexistent interference frequency set and being contained in the second coexistent interference frequency set. Therefore, the UE may perform coexistent interference evaluation on the frequencies contained in the first coexistent interference frequency set and frequencies contained in the fourth coexistent interference frequency set.

For example, the first coexistent interference frequency set A={f₃, f₄, f₅, f₆} and the second coexistent interference frequency set B={f₁, f₂, f₃, f₄, f₅, f₆}, then the fourth coexistent interference frequency set C={f₁, f₂}. Therefore, the target base station needs only to transmit {f₁, f₂} to the UE, and the UE may determine to perform coexistent interference evaluation on {f₁, f₂, f₃, f₄, f₅, f₆} according to { f₃, f₄, f₅, f₆} and {f₁, f₂}.

In this mode of implementation, for example, in a case where the second coexistent interference frequency set contains the first coexistent interference frequency set and both of the first coexistent interference frequency set and the second coexistent interference frequency set are relatively large, the relatively small fourth coexistent interference frequency set may only be transmitted, thereby saving communication resources and improving the performance of the system.

In particular implementation, the target base station may further transmit information indicating a coexistent interference frequency set. For example, in transmitting the third coexistent interference frequency set, a bit "0" may be transmitted, the bit identifying that the coexistent interference frequency set is the third coexistent interference frequency set. Therefore, the UE may perform coexistent interference evaluation on the frequencies contained in the first coexistent interference frequency set but not contained in the third coexistent interference frequency set.

In transmitting the fourth coexistent interference frequency set, a bit "1" may be transmitted, the bit identifying that the coexistent interference frequency set is the fourth coexistent interference frequency set. Therefore, the UE may perform coexistent interference evaluation on the frequencies contained in the first coexistent interference frequency set and frequencies contained in the fourth coexistent interference frequency set.

And the information indicating a coexistent interference frequency set may not be transmitted in transmitting the second coexistent interference frequency set, so that the UE may directly perform coexistent interference evaluation on the frequencies contained in the second coexistent interference frequency set.

In particular implementation, different data structures may be defined for different coexistent interference frequency sets. For example, it may be achieved by an information element (IE), the first coexistent interference frequency set using a first type of an information element, the second coexistent interference frequency set using a second type of an information element, the third coexistent interference frequency set using a third type of an information element, and the fourth coexistent interference frequency set using a fourth type of an information element.

In receiving the third type of an information element, the UE may determine that the information element correspond to the third coexistent interference frequency set, hence, it may perform coexistent interference evaluation on the frequencies contained in the first coexistent interference frequency set but not contained in the third coexistent interference frequency set.

In receiving the fourth type of an information element, the UE may determine that the information element correspond to the fourth coexistent interference frequency set, hence, it may perform coexistent interference evaluation on the frequencies contained in the first coexistent interference frequency set and the frequencies contained in the fourth coexistent interference frequency set.

In receiving the second type of an information element, the UE may determine that the information element correspond to the second coexistent interference frequency set, hence, it may directly perform coexistent interference evaluation on the frequencies contained in the second coexistent interference frequency set.

It should be noted that the above modes of implementation are just illustrative explanation to how to reconfigure a coexistent interference frequency set. However, it is not limited thereto, and a particular mode of implementation may be determined according to an actual situation.

It can be seen from the above embodiment that: receiving by a target base station a first coexistent interference frequency set configured for UE transmitted by a source base station when the UE is handed over from the source base station to the target base station, and not reconfiguring a coexistent interference frequency set for the UE by the target base station if the first coexistent interference frequency set and the second coexistent interference frequency set are identical, configuration of coexistent interference frequency by the base station may be reduced, waste of system resources may lowered, and performance of the system may be improved.

### Embodiment 2

An embodiment of the present disclosure provides a configuration method for a coexistent interference frequency set, which is described on the basis of Embodiment 1 from a UE side, with the contents identical to those in Embodiment 1 being not going to be described herein any further.

Fig. 4 is a flowchart of the configuration method of the embodiment of the present disclosure. As shown in Fig. 4, the configuration method includes:
step 401: performing, by UE, coexistent interference evaluation on frequencies in a first coexistent interference frequency set when the UE does not receive information on reconfiguring a coexistent interference frequency set;
wherein the first coexistent interference frequency set is configured by a source base station; when the UE is handed over from the source base station to a target base station, the first coexistent interference frequency set is transmitted by the source base station to the target base station; and the target base station does not reconfigure a coexistent interference frequency set for the UE if the first coexistent interference frequency set is identical to a preset second coexistent interference frequency set.

In this embodiment, if the UE does not receive the information on reconfiguring a coexistent interference frequency set transmitted by the target base station, it may proceed with using the first coexistent interference frequency set configured by the source base station, thereby reducing configuration of coexistent interference frequency sets.

In particular implementation, the method may further include: receiving, by the UE, indication information for using the first coexistent interference frequency set transmitted by the target base station; and performing coexistent interference evaluation on frequencies in the first coexistent interference frequency set by the UE according to the indication information.

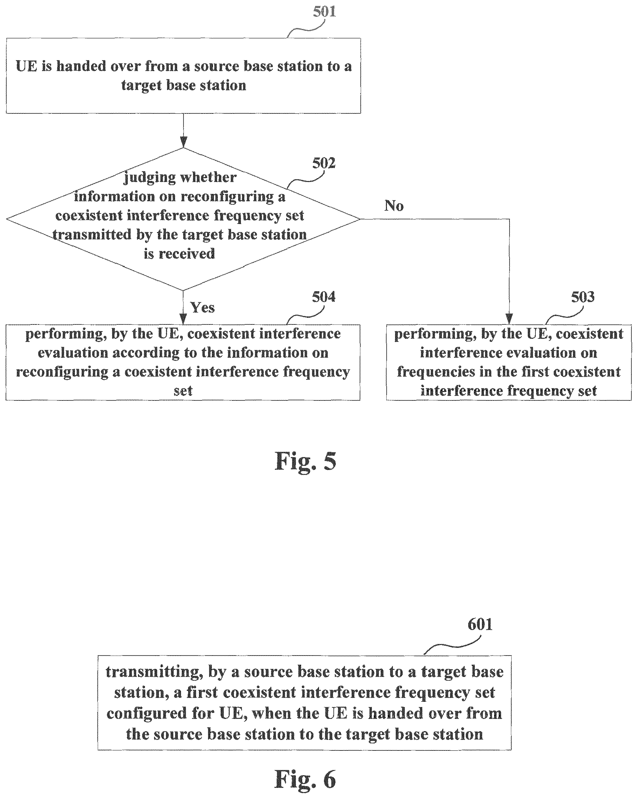

Fig. 5 is another flowchart of the configuration method of the embodiment of the present disclosure. As shown in Fig. 5, the configuration method includes:
step 501: UE is handed over from a source base station to a target base station;
step 502: judging, by the UE, whether information on reconfiguring a coexistent interference frequency set transmitted by the target base station is received; executing step 503 if the information on reconfiguring a coexistent interference frequency set is not received; and executing step 504 if the information on reconfiguring a coexistent interference frequency set is received;
in this embodiment, the UE may further receive indication information on using a first coexistent interference frequency set transmitted by the target base station, and step 503 is executed after the indication information is received;
step 503: performing, by the UE, coexistent interference evaluation on frequencies in the first coexistent interference frequency set; and
step 504: performing, by the UE, coexistent interference evaluation according to the information on reconfiguring a coexistent interference frequency set.

In a mode of implementation, the information on reconfiguring a coexistent interference frequency set may include a second coexistent interference frequency set, and the UE performs coexistent interference evaluation on the frequencies in the second coexistent interference frequency set.

In another mode of implementation, the information on reconfiguring a coexistent interference frequency set may include a third coexistent interference frequency set; wherein, the first coexistent interference frequency set contains the second coexistent interference frequency set, and frequencies in the third coexistent interference frequency set are contained in the first coexistent interference frequency set but are not contained in the second coexistent interference frequency set. And the UE performs coexistent interference evaluation on the frequencies contained in the first coexistent interference frequency set but not contained in the third coexistent interference frequency set.

In a further mode of implementation, the information on reconfiguring a coexistent interference frequency set may include a fourth coexistent interference frequency set; wherein, the second coexistent interference frequency set contains the first coexistent interference frequency set, and frequencies in the fourth coexistent interference frequency set are not contained in the first coexistent interference frequency set but are contained in the second coexistent interference frequency set. And the UE performs coexistent interference evaluation on the frequencies contained in the first coexistent interference frequency and the frequencies contained in the fourth coexistent interference frequency set.

It can be seen from the above embodiment that: receiving by a target base station a first coexistent interference frequency set configured for UE transmitted by a source base station when the UE is handed over from the source base station to the target base station, and not reconfiguring a coexistent interference frequency set for the UE by the target base station if the first coexistent interference frequency set and the second coexistent interference frequency set are identical, configuration of coexistent interference frequency by the base station may be reduced, waste of system resources may lowered, and performance of the system may be improved.

### Embodiment 3

An embodiment of the present disclosure provides a configuration method for a coexistent interference frequency set, which is fully described on the basis of embodiments 1 and 2 from a source base station side, a target base station side and a UE side, with the contents identical to those in embodiments 1 and 2 being not going to be described herein any further.

Fig. 6 is a flowchart of the configuration method of the embodiment of the present disclosure. As shown in Fig. 6, the configuration method includes:
step 601: transmitting, by a source base station to a target base station, a first coexistent interference frequency set configured for UE, when the UE is handed over from the source base station to the target base station;
wherein, the source base station may transmit the first coexistent interference frequency set via a handover request message. In particular implementation, transmission may be performed via an X2 interface, and may also be performed via an S1 interface. However, it is not limited thereto, and a particular message and a manner of transmission may be determined according to an actual situation.

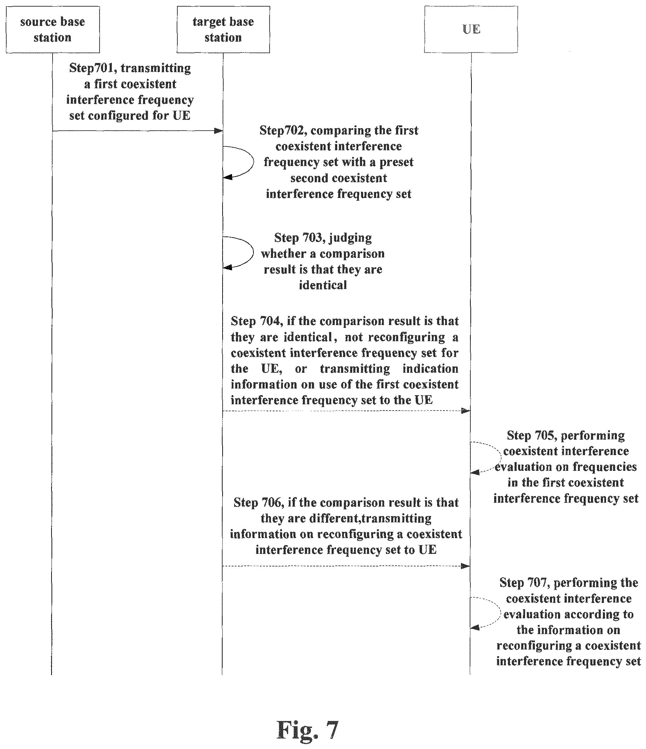

Fig. 7 is another flowchart of the configuration method of the embodiment of the present disclosure. As shown in Fig. 7, the configuration method includes:
step 701: transmitting, by a source base station to a target base station, a first coexistent interference frequency set configured for UE, when the UE is handed over from the source base station to the target base station;
step 702: comparing, by the target base station, the first coexistent interference frequency set with a preset second coexistent interference frequency set, after receiving the first coexistent interference frequency set configured for UE transmitted by the source base station;
step 703: judging, by the target base station, whether a comparison result is that they are identical; executing step 704 if the comparison result is that they are identical; and executing step 706 if the comparison result is that they are different;
step 704: not reconfiguring, by the target base station, the UE with a coexistent interference frequency set, or transmitting indication information on use of the first coexistent interference frequency set to the UE;
step 705: performing, by the UE, coexistent interference evaluation on frequencies in the first coexistent interference frequency set;
in this embodiment, if the first coexistent interference frequency set (set A) is identical to the second coexistent interference frequency set (set B), the target base station needs not to reconfigure the coexistent interference frequency set for the UE, or may transmit an indication message indicating that the UE may use a coexistent interference frequency set identical to that of the source base station. In such a case, the UE may follow the set A of the source base station for performing the coexistent interference evaluation;
step 706: transmitting, by the target base station to the UE, information on reconfiguring a coexistent interference frequency set; and
step 707: performing, by the UE, the coexistent interference evaluation according to the information on reconfiguring a coexistent interference frequency set.

In this embodiment, if the set A is different from the set B, the target base station will reconfigure a coexistent interference frequency set for the UE. In particular implementation, the target base station may reconfigure the set B for the UE, and the UE performs coexistent interference evaluation on frequencies in the set B.

Or, if the set A contains the set B, the target base station may notify the UE that which frequencies in the original set (i.e. the set A) are not in the set B (such as a redundant set C), and the UE performs coexistent interference evaluation on frequencies belonging to the set A but not belonging to the redundant set C.

Or, if the set B contains the set A, the target base station may notify the UE that which frequencies (such as a new frequency set D) are added in the target base station besides the frequencies in the original set (i.e. the set A), and the UE performs coexistent interference evaluation on frequencies belonging to the set A and the new frequency set D.

It can be seen from the above embodiment that: receiving by a target base station a first coexistent interference frequency set configured for UE transmitted by a source base station when the UE is handed over from the source base station to the target base station, and not reconfiguring a coexistent interference frequency set for the UE by the target base station if the first coexistent interference frequency set and the second coexistent interference frequency set are identical, configuration of coexistent interference frequency by the base station may be reduced, waste of system resources may lowered, and performance of the system may be improved.

### Embodiment 4

An embodiment of the present disclosure provides a base station, which is a target base station when UE is handed over. This embodiment corresponds to Embodiment 1, and the same contents shall not be described herein any further.

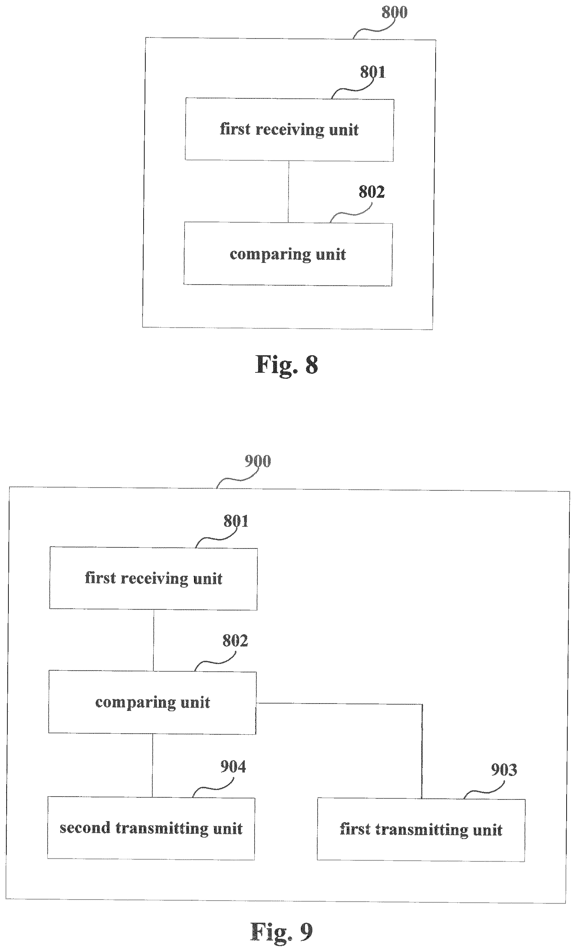

Fig. 8 is a schematic diagram of the structure of the base station of the embodiment of the present disclosure. As shown in Fig. 8, the base station 800 includes: a first receiving unit 801 and a comparing unit 802. The relevant art may be referred to for other parts of the base station 800, which shall not be described herein any further;
wherein, the first receiving unit 801 is configured to receive a first coexistent interference frequency set configured for UE transmitted by a source base station, when the UE is handed over from the source base station to a target base station; and the comparing unit 802 is configured to compare the first coexistent interference frequency set with a preset second coexistent interference frequency set; wherein if a result of the comparison is that they are identical, the target base station does not reconfigure a coexistent interference frequency set for the UE.

Fig. 9 is another schematic diagram of the structure of the base station of the embodiment of the present disclosure. As shown in Fig. 9, the base station 900 includes: a first receiving unit 801 and a comparing unit 802, as described above.

As shown in Fig. 9, the base station 900 may further include: a first transmitting unit 903 configured to transmit indication information for using the first coexistent interference frequency set to the UE when the first coexistent interference frequency set and the second coexistent interference frequency set are identical.

As shown in Fig. 9, the base station 900 may further include: a second transmitting unit 904 configured to transmit information on reconfiguring a coexistent interference frequency set to the UE, if a result of comparison of the comparing unit 802 is that the first coexistent interference frequency set is different from the second coexistent interference frequency set.

In this embodiment, the second coexistent interference frequency set is configured by the target base station according to situations of use of the frequencies of itself and neighboring base stations.

It can be seen from the above embodiment that: receiving by a target base station a first coexistent interference frequency set configured for UE transmitted by a source base station when the UE is handed over from the source base station to the target base station, and not reconfiguring a coexistent interference frequency set for the UE by the target base station if the first coexistent interference frequency set and the second coexistent interference frequency set are identical, configuration of coexistent interference frequency by the base station may be reduced, waste of system resources may lowered, and performance of the system may be improved.

### Embodiment 5

An embodiment of the present disclosure provides UE, which is handed over from a source base station to a target base station. This embodiment corresponds to Embodiment 2, and the same contents shall not be described herein any further.

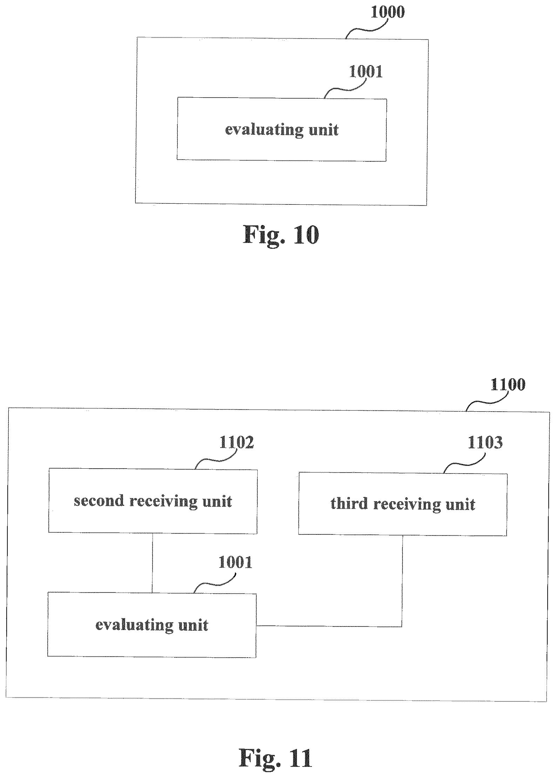

Fig. 10 is a schematic diagram of the structure of the UE of the embodiment of the present disclosure. As shown in Fig. 10, the UE 1000 includes: an evaluating unit 1001. The relevant art may be referred to for other parts of the UE 1000, which shall not be described herein any further;
wherein, the evaluating unit 1001 is configured to perform coexistent interference evaluation on frequencies in a first coexistent interference frequency set when no information on reconfiguring a coexistent interference frequency set is received;
wherein the first coexistent interference frequency set is configured by a source base station; when the UE is handed over from the source base station to a target base station, the first coexistent interference frequency set is transmitted by the source base station to the target base station; and the target base station does not reconfigure a coexistent interference frequency set for the UE if the first coexistent interference frequency set is identical to a preset second coexistent interference frequency set.

Fig. 11 is another schematic diagram of the structure of the UE of the embodiment of the present disclosure. As shown in Fig. 11, the UE 1100 includes an evaluating unit 1001, as described above.

As shown in Fig. 11, the UE 1100 may further include: a second receiving unit 1102 configured to receive indication information for using the first coexistent interference frequency set transmitted by the target base station. And the evaluating unit 1001 is further configured to perform coexistent interference evaluation on frequencies in the first coexistent interference frequency set after it receives the indication information.

As shown in Fig. 11, the UE 1100 may further include: a third receiving unit 1103 configured to receive information on reconfiguring a coexistent interference frequency set for the UE transmitted by the target base station. And the evaluating unit 1001 is further configured to evaluate the coexistent interference according to the information on reconfiguring a coexistent interference frequency set.

In an embodiment, the information on reconfiguring a coexistent interference frequency set includes the second coexistent interference frequency set; and the evaluating unit 1001 performs coexistent interference evaluation on frequencies in the second coexistent interference frequency set.

In another embodiment, the information on reconfiguring a coexistent interference frequency set includes a third coexistent interference frequency set; the first coexistent interference frequency set contains the second coexistent interference frequency set, and frequencies in the third coexistent interference frequency set are contained in the first coexistent interference frequency set but not contained in the second coexistent interference frequency set; and the evaluating unit 1001 performs coexistent interference evaluation on frequencies contained in the first coexistent interference frequency set but not contained in the third coexistent interference frequency set.

In still another embodiment, the information on reconfiguring a coexistent interference frequency set includes a fourth coexistent interference frequency set; the second coexistent interference frequency set contains the first coexistent interference frequency set, and frequencies in the fourth coexistent interference frequency set are not contained in the first coexistent interference frequency set but contained in the second coexistent interference frequency set; and the evaluating unit 1001 performs coexistent interference evaluation on the frequencies contained in the first coexistent interference frequency set and the frequencies contained in the fourth coexistent interference frequency set.

It can be seen from the above embodiment that: receiving by a target base station a first coexistent interference frequency set configured for UE transmitted by a source base station when the UE is handed over from the source base station to the target base station, and not reconfiguring a coexistent interference frequency set for the UE by the target base station if the first coexistent interference frequency set and the second coexistent interference frequency set are identical, configuration of coexistent interference frequency by the base station may be reduced, waste of system resources may lowered, and performance of the system may be improved.

### Embodiment 6

An embodiment of the present disclosure provides a base station, which is a source base station when UE is handed over. This embodiment corresponds to Embodiment 3, and the same contents shall not be described herein any further.

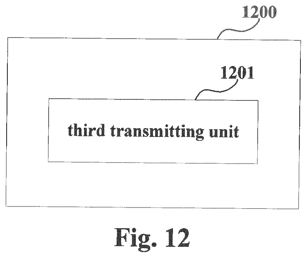

Fig. 12 is a schematic diagram of the structure of the base station of the embodiment of the present disclosure. As shown in Fig. 12, the base station 1200 includes: a third transmitting unit 1201. The relevant art may be referred to for other parts of the base station 1200, which shall not be described herein any further;
wherein, the third transmitting unit 1201 is configured to transmit a first coexistent interference frequency set configured for UE to a target base station, when the UE is handed over from a source base station to the target base station;
wherein, the third transmitting unit 1201 may transmit the first coexistent interference frequency set via a handover request message.

It can be seen from the above embodiment that: receiving by a target base station a first coexistent interference frequency set configured for UE transmitted by a source base station when the UE is handed over from the source base station to the target base station, and not reconfiguring a coexistent interference frequency set for the UE by the target base station if the first coexistent interference frequency set and the second coexistent interference frequency set are identical, configuration of coexistent interference frequency by the base station may be reduced, waste of system resources may lowered, and performance of the system may be improved.

An embodiment of the present disclosure provides a computer-readable program, wherein when the program is executed in a base station, the program enables a computer to carry out the configuration method for a coexistent interference frequency set as described above in the base station.

An embodiment of the present disclosure provides a storage medium in which a computer-readable program is stored, wherein the computer-readable program enables a computer to carry out the configuration method for a coexistent interference frequency set as described above in a base station.

An embodiment of the present disclosure provides a computer-readable program, wherein when the program is executed in UE, the program enables a computer to carry out the configuration method for a coexistent interference frequency set as described above in the UE.

An embodiment of the present disclosure provides a storage medium in which a computer-readable program is stored, wherein the computer-readable program enables a computer to carry out the configuration method for a coexistent interference frequency set as described above in UE.

The above apparatus and method of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure as defined in the claims.

## Claims

1. A target base station, comprising:
a first receiving unit (801), configured to receive a first coexistent interference frequency set, the coexistent interference relating to interferences between the multiple transceivers of a UE, the first coexistent interference frequency set being configured for UE, transmitted by a source base station, when the UE is handed over from the source base station to the target base station; wherein coexistence interference on frequencies in the first coexistence interference frequency set has been configured by the source base station so that the UE needs to evaluate whether there exists coexistent interference frequencies in the first coexistence interference frequency set; and
a configuring unit, configured to determine whether to reconfigure the coexistent interference frequency set in the target base station by using a second coexistent interference frequency set, wherein coexistence interference needs to be evaluated by the UE in the second coexistent interference frequencies when the UE is in a cell of the target base station.

2. The target base station according to claim 1, wherein the target base station further comprises:
a comparing unit (802), configured to compare the first coexistent interference frequency set with a preset coexistent interference frequency set; wherein if a result of the comparison is that they are identical, the target base station does not transmit information on reconfiguring a coexistent interference frequency set for the UE.

3. The target base station according to claim 2, wherein the target base station further comprises:
a first transmitting unit (903), configured to transmit indication information for using the first coexistent interference frequency set to the UE.

4. The target base station according to claim 2, wherein the target base station further comprises:
a second transmitting unit (904), configured to transmit information on reconfiguring a coexistent interference frequency set to the UE, if the result of comparison of the comparing unit is that the first coexistent interference frequency set is different from the preset coexistent interference frequency set.

5. The target base station according to claim 4, wherein the information on reconfiguring a coexistent interference frequency set comprises the preset coexistent interference frequency set, so that the UE performs coexistent interference evaluation on the frequencies in the preset coexistent interference frequency set.

6. The target base station according to claim 4, wherein the information on reconfiguring a coexistent interference frequency set comprises a third coexistent interference frequency set, so that the UE performs coexistent interference evaluation on frequencies contained in the first coexistent interference frequency set but not contained in the third coexistent interference frequency set;
wherein the first coexistent interference frequency set contains the preset coexistent interference frequency set, and the frequencies in the third coexistent interference frequency set are contained in the first coexistent interference frequency set but not contained in the preset coexistent interference frequency set.

7. The target base station according to claim 4, wherein the information on reconfiguring a coexistent interference frequency set comprises a fourth coexistent interference frequency set, so that the UE performs coexistent interference evaluation on frequencies contained in the first coexistent interference frequency set and frequencies contained in the fourth coexistent interference frequency set;
wherein the preset coexistent interference frequency set contains the first coexistent interference frequency set, and the frequencies in the fourth coexistent interference frequency set are not contained in the first coexistent interference frequency set but contained in the preset coexistent interference frequency set.

8. The target base station according to claim 2, wherein the preset coexistent interference frequency set is configured by the target base station according to situations of use of the frequencies of itself and neighboring base stations.

9. A communication system, comprising a source base station, a UE and a target base station, wherein
the source base station is configured to transmit a first coexistent interference frequency set configured for UE to the target base station, the coexistent interference relating to interferences between the multiple transceivers of the UE, wherein coexistence interference on frequencies in the first coexistence interference frequency set has been configured by the source base station so that the UE needs to evaluate whether there exists coexistent interference frequencies in the first coexistence interference frequency set; and
the target base station is configured to receive the first coexistent interference frequency set when the UE is handed over from the source base station to the target base station, and to determine whether to reconfigure the coexistent interference frequency set in the target base station by using a second coexistent interference frequency set, wherein coexistence interference needs to be evaluated by the UE in the second coexistent interference frequencies when the UE is in a cell of the target base station.

10. The communication system according to claim 9, wherein
the target base station is further configured to compare the first coexistent interference frequency set with a preset coexistent interference frequency set; and
if a result of the comparison is that they are identical, the target base station does not transmit information on reconfiguring a coexistent interference frequency set for the UE.

## Patentansprüche

1. Zielbasisstation, umfassend:
eine erste Empfangseinheit (801), die zum Empfangen eines ersten Frequenzsatzes koexistierender Interferenz konfiguriert ist, wobei die koexistierende Interferenz Interferenzen zwischen den mehreren Transceivern einer UE betrifft, wobei der erste Frequenzsatz koexistierender Interferenz für die UE konfiguriert ist, der von einer Ursprungsbasisstation übertragen wird, wenn die UE von der Ursprungsbasisstation an die Zielbasisstation übergeben wird; wobei koexistierende Interferenz auf Frequenzen im ersten Frequenzsatz koexistierender Interferenz von der Ursprungsbasisstation derart konfiguriert ist, dass die UE beurteilen muss, ob Frequenzen koexistierender Interferenz im ersten Frequenzsatz koexistierender Interferenz existieren; und
eine Konfigurationseinheit, die zum Bestimmen konfiguriert ist, ob der Frequenzsatz koexistierender Interferenz in der Zielbasisstation durch Verwenden eines zweiten Frequenzsatzes koexistierender Interferenz neu konfiguriert werden muss, wobei koexistierende Frequenz in den zweiten Frequenzen koexistierender Interferenz von der UE beurteilt werden muss, wenn die UE in einer Zelle der Zielbasisstation ist.

2. Zielbasisstation nach Anspruch 1, wobei die Zielbasisstation ferner umfasst:
eine Vergleichseinheit (802), die zum Vergleichen des ersten Frequenzsatzes koexistierender Interferenz mit einem voreingestellten Frequenzsatz koexistierender Interferenz konfiguriert ist;
wobei die Zielbasisstation keine Informationen über das erneute Konfigurieren eines Frequenzsatzes koexistierender Interferenz für die UE überträgt, wenn ein Ergebnis des Vergleichs besagt, dass sie identisch sind.

3. Zielbasisstation nach Anspruch 2, wobei die Zielbasisstation ferner umfasst:
eine erste Übertragungseinheit (903), die zum Übertragen von Angabeinformationen zum Verwenden des ersten Frequenzsatzes koexistierender Interferenz an die UE konfiguriert ist.

4. Zielbasisstation nach Anspruch 2, wobei die Zielbasisstation ferner umfasst:
eine zweite Übertragungseinheit (904), die zum Übertragen von Informationen über erneutes Konfigurieren eines Frequenzsatzes koexistierender Interferenz an die UE konfiguriert ist, wenn das Ergebnis des Vergleichs der Vergleichseinheit besagt, dass der erste Frequenzsatz koexistierender Interferenz sich von dem voreingestellten Frequenzsatz koexistierender Interferenz unterscheidet.

5. Zielbasisstation nach Anspruch 4, wobei die Informationen zum erneuten Konfigurieren eines Frequenzsatzes koexistierender Interferenz den voreingestellten Frequenzsatz koexistierender Interferenz umfassen, sodass die UE eine Beurteilung koexistierender Interferenz an den Frequenzen in dem voreingestellten Frequenzsatz koexistierender Interferenz durchführt.

6. Zielbasisstation nach Anspruch 4, wobei die Informationen zum erneuten Konfigurieren eines Frequenzsatzes koexistierender Interferenz einen dritten Frequenzsatz koexistierender Interferenz umfassen, sodass die UE eine Beurteilung koexistierender Interferenz an Frequenzen durchführt, die im ersten Frequenzsatz koexistierender Interferenz, aber nicht im dritten Frequenzsatz koexistierender Interferenz enthalten sind;
wobei der erste Frequenzsatz koexistierender Interferenz den voreingestellten Frequenzsatz koexistierender Interferenz enthält und die Frequenzen im dritten Frequenzsatz koexistierender Interferenz im ersten Frequenzsatz koexistierender Interferenz, aber nicht im voreingestellten Frequenzsatz koexistierender Interferenz enthalten sind.

7. Zielbasisstation nach Anspruch 4, wobei die Informationen zum erneuten Konfigurieren eines Frequenzsatzes koexistierender Interferenz einen vierten Frequenzsatz koexistierender Interferenz umfassen, sodass die UE eine Beurteilung koexistierender Interferenz an Frequenzen durchführt, die in dem ersten Frequenzsatz koexistierender Interferenz enthalten sind, und an Frequenzen, die im vierten Frequenzsatz koexistierender Interferenz enthalten sind;
wobei der erste Frequenzsatz koexistierender Interferenz den ersten Frequenzsatz koexistierender Interferenz enthält und die Frequenzen im vierten Frequenzsatz koexistierender Interferenz nicht im ersten Frequenzsatz koexistierender Interferenz, aber im voreingestellten Frequenzsatz koexistierender Interferenz enthalten sind.

8. Zielbasisstation nach Anspruch 2, wobei der voreingestellte Frequenzsatz koexistierender Interferenz von der Zielbasisstation entsprechend Situationen zur Verwendung der Frequenzen bei sich selbst und benachbarten Basisstationen konfiguriert ist.

9. Kommunikationssystem, umfassend eine Ursprungsbasisstation, eine UE und eine Zielbasisstation, wobei
die Ursprungsbasisstation zum Übertragen eines ersten für die UE konfigurierten Frequenzsatzes koexistierender Interferenz an die Zielbasisstation konfiguriert ist, wobei die koexistierende Interferenz Interferenzen zwischen den mehreren Transceivern der UE betrifft, wobei koexistierende Interferenz auf Frequenzen im ersten Frequenzsatz koexistierender Interferenz von der Ursprungsbasisstation derart konfiguriert ist, dass die UE beurteilen muss, ob Frequenzen koexistierender Interferenz im ersten Frequenzsatz koexistierender Interferenz existieren; und
die Zielbasisstation zum Empfangen des ersten Frequenzsatzes koexistierender Interferenz, wenn die UE von der Ursprungsbasisstation an die Zielbasisstation übergeben wird, und zum Bestimmen konfiguriert ist, ob der Frequenzsatz koexistierender Interferenz in der Zielbasisstation durch Verwenden eines zweiten Frequenzsatzes koexistierender Interferenz neu konfiguriert werden muss, wobei koexistierende Frequenz in den zweiten Frequenzen koexistierender Interferenz von der UE beurteilt werden muss, wenn die UE in einer Zelle der Zielbasisstation ist.

10. Kommunikationssystem nach Anspruch 9, wobei
die Zielbasisstation ferner zum Vergleichen des ersten Frequenzsatzes koexistierender Interferenz mit einem voreingestellten Frequenzsatz koexistierender Interferenz konfiguriert ist; und
die Zielbasisstation keine Informationen über das erneute Konfigurieren eines Frequenzsatzes koexistierender Interferenz für die UE überträgt, wenn ein Ergebnis des Vergleichs besagt, dass sie identisch sind.

## Revendications

1. Station de base cible, comprenant :
une première unité de réception (801), configurée pour recevoir un premier ensemble de fréquences d'interférence de coexistence, l'interférence de coexistence se rapportant à des interférences entre les multiples émetteurs-récepteurs d'un UE, le premier ensemble de fréquences d'interférence de coexistence étant configuré pour un UE, transmis par une station de base source, lorsque l'UE est transféré de la station de base source à la station de base cible ; dans laquelle l'interférence de coexistence sur des fréquences du premier ensemble de fréquences d'interférence de coexistence a été configurée par la station de base source de sorte que l'UE doit évaluer s'il existe des fréquences d'interférence de coexistence dans le premier ensemble de fréquences d'interférence de coexistence ; et
une unité de configuration, configurée pour déterminer s'il faut reconfigurer l'ensemble de fréquences d'interférence de coexistence dans la station de base cible en utilisant un deuxième ensemble de fréquences d'interférence de coexistence, l'interférence de coexistence devant être évaluée par l'UE dans les secondes fréquences d'interférence de coexistence lorsque l'UE se trouve dans une cellule de la station de base cible.

2. Station de base cible selon la revendication 1, dans laquelle la station de base cible comprend en outre :
une unité de comparaison (802), configurée pour comparer le premier ensemble de fréquences d'interférence de coexistence avec un ensemble de fréquences d'interférence de coexistence prédéfini ; dans laquelle si un résultat de la comparaison est qu'ils sont identiques, la station de base cible ne transmet pas d'informations sur la reconfiguration d'un ensemble de fréquences d'interférence de coexistence pour l'UE.

3. Station de base cible selon la revendication 2, dans laquelle la station de base cible comprend en outre :
une première unité de transmission (903), configurée pour transmettre des informations d'indication pour utiliser le premier ensemble de fréquences d'interférence de coexistence à l'UE.

4. Station de base cible selon la revendication 2, dans laquelle la station de base cible comprend en outre :
une seconde unité de transmission (904), configurée pour transmettre des informations sur la reconfiguration d'un ensemble de fréquences d'interférence de coexistence à l'UE, si le résultat de comparaison de l'unité de comparaison est que le premier ensemble de fréquences d'interférence de coexistence est différent de l'ensemble de fréquences d'interférence de coexistence prédéfini.

5. Station de base cible selon la revendication 4, dans laquelle les informations sur la reconfiguration d'un ensemble de fréquences d'interférence de coexistence comprennent l'ensemble de fréquences d'interférence de coexistence prédéfini, de sorte que l'UE effectue une évaluation d'interférence de coexistence sur les fréquences de l'ensemble de fréquences d'interférence de coexistence prédéfini.

6. Station de base cible selon la revendication 4, dans laquelle les informations sur la reconfiguration d'un ensemble de fréquences d'interférence de coexistence comprennent un troisième ensemble de fréquences d'interférence de coexistence, de sorte que l'UE effectue une évaluation d'interférence de coexistence sur des fréquences contenues dans le premier ensemble de fréquences d'interférence de coexistence mais non contenues dans le troisième ensemble de fréquences d'interférence de coexistence ;
dans lequel le premier ensemble de fréquences d'interférence de coexistence contient l'ensemble de fréquences d'interférence de coexistence prédéfini, et les fréquences dans le troisième ensemble de fréquences d'interférence de coexistence sont contenues dans le premier ensemble de fréquences d'interférence de coexistence mais non contenues dans l'ensemble de fréquences d'interférence de coexistence prédéfini.

7. Station de base cible selon la revendication 4, dans laquelle les informations sur la reconfiguration d'un ensemble de fréquences d'interférence de coexistence comprennent un quatrième ensemble de fréquences d'interférence de coexistence, de sorte que l'UE effectue une évaluation d'interférence de coexistence sur des fréquences contenues dans le premier ensemble de fréquences d'interférence de coexistence et des fréquences contenues dans le quatrième ensemble de fréquences d'interférence de coexistence ;
dans lequel l'ensemble de fréquences d'interférence de coexistence prédéfini contient le premier ensemble de fréquences d'interférence de coexistence, et les fréquences dans le quatrième ensemble de fréquences d'interférence de coexistence ne sont pas contenues dans le premier ensemble de fréquences d'interférence de coexistence mais contenues dans l'ensemble de fréquences d'interférence de coexistence prédéfini.

8. Station de base cible selon la revendication 2, dans laquelle l'ensemble de fréquences d'interférence de coexistence prédéfini est configuré par la station de base cible en fonction de situations d'utilisation des fréquences d'elle-même et de stations de base voisines.

9. Système de communication, comprenant une station de base source, un UE et une station de base cible, dans lequel
la station de base source est configurée pour transmettre un premier ensemble de fréquences d'interférence de coexistence configuré pour l'UE à la station de base cible, l'interférence de coexistence se rapportant à des interférences entre les multiples émetteurs-récepteurs de l'UE, dans lequel l'interférence de coexistence sur des fréquences du premier ensemble de fréquences d'interférence de coexistence a été configurée par la station de base source de sorte que l'UE doit évaluer s'il existe des fréquences d'interférence de coexistence dans le premier ensemble de fréquences d'interférence de coexistence ; et
la station de base cible est configurée pour recevoir le premier ensemble de fréquences d'interférence de coexistence lorsque l'UE est transféré de la station de base source à la station de base cible, et pour déterminer s'il faut reconfigurer l'ensemble de fréquences d'interférence de coexistence dans la station de base cible en utilisant un deuxième ensemble de fréquences d'interférence de coexistence, dans lequel l'interférence de coexistence doit être évaluée par l'UE dans les secondes fréquences d'interférence de coexistence lorsque l'UE se trouve dans une cellule de la station de base cible.

10. Système de communication selon la revendication 9, dans lequel
la station de base cible est en outre configurée pour comparer le premier ensemble de fréquences d'interférence de coexistence avec un ensemble de fréquences d'interférence de coexistence prédéfini ; et
si un résultat de la comparaison est qu'ils sont identiques, la station de base cible ne transmet pas d'informations sur la reconfiguration d'un ensemble de fréquences d'interférence de coexistence pour l'UE.
